# EUROPEAN PATENT SPECIFICATION

(11) **EP 3 461 280 B1**
(45) Date of publication and mention of the grant of the patent: **16.02.2022**
(21) Application number: 16790761.7
(22) Date of filing: 07.09.2016
(51) Int. Cl.: F16C 35/073, F16C 35/063

(54) **A BEARING WHICH CAN BE QUICKLY ASSEMBLED AND DISASSEMBLED**
SCHNELL MONTIERBARES UND DEMONTIERBARES LAGER
PALIER POUVANT ÊTRE RAPIDEMENT MONTÉ ET DÉMONTÉ

(30) Priority: 15.06.2016 TR 201608187
(43) Date of publication of application: 03.04.2019
(73) Proprietor: Ortadogu Rulman Sanayi Ve Ticaret Anonim Sirketi, 06901 Ankara (TR)
(72) Inventor: SAYDEMIR, Nazmi, 06900 Polatli/Ankara (TR)
(74) Representative: Berkkam, Ayfer
(86) International application number: PCT/TR2016/050335
(87) International publication number: WO 2017/217947

(56) References cited:
- DE-A1- 3 931 920
- DE-A1-102013 208 873
- DE-C- 924 177
- US-A1- 2010 033 965

## Description

### Technical Field

The present invention relates to a bearing which can be quickly and easily fixed and loosened on a shaft.

More specifically, it relates to a bearing which can be fixed to a shaft by tightening the balls placed in the slots opened on the inner bearing ring with the retaining ring.

### Prior Art

Fixing bearings to shafts is an important issue. Nowadays, methods such as screwing, slot or groove opening are used for axially fixing bearings on shafts. Alternatively, there are methods whereby the bearing and the shaft are rendered integral thanks to certain parts that keep the bearing and the shaft together and that are clamped or fixed onto the shaft. In some methods, these integral systems can only be used at the beginning or the end of the shaft. As a result of these methods, deformations occur due to the slots opened on the shaft. Furthermore, inserting and removing the bearings that need to move over the shaft is a time-consuming process and the bearings cannot be fixed to other places in methods where only the beginning and the end of the shaft are used. Thus, certain recommendations have been developed in the art.

In the known art, the Japanese patent document with application no: JP2012247023 describes a method whereby the inner ring of the bearing is screwed to the nut by means of a slit and the screw pitches in the front part and fixed to the shaft via the applied force.

Moreover, in the known art, the US patent document with application no: US2012027334A1 describes a mechanism which fixes a bearing to the shaft thanks to the separator arms and layers which are formed as receiver and clutch discs.

Also in the known art, the Chinese patent document with application no: CN2797742Y describes a bearing which can be mounted on a shaft with a locking disc where the inner ring is connected via its locking bars.

A further mechanism for fixing a bearing to a shaft is known from DE 39 31 920 A1.

A locking system which can be easily fixed and loosened on the shaft will not cause said deformations on the shaft and will save time during the assembly and disassembly of the bearing.

Therefore, a need arises to develop a bearing which can be easily fixed and loosened on any desired are of the shaft.

### Objectives and Brief Description of the Invention

The objective of the present invention is to provide a bearing which can be easily and quickly fixed and loosened on the shaft.

Another objective of the invention is to provide a bearing which can be easily and quickly fixed and loosened on the shaft by applying a small force on the bearing. Yet another objective of the present invention is to provide a bearing which can be fixed to a shaft by tightening the balls placed in the slots opened on the inner bearing ring with the retaining ring.

In the present invention, disc springs are placed on the inner ring. On top of the disc springs, the retaining ring is placed on the inner ring in a way that its conical part faces the ball slots. The retaining ring is moved axially towards the disc springs to allow the retaining balls to be placed in the retaining ball slots. Afterwards, due to the disc springs pushing the retaining ring axially and the pressure applied by the conical part of the retaining ring on the balls, the balls are made to apply radial force on the shaft. As a result, the bearing is fixed at the desired position on the shaft. As the conical part of the retaining ring will uncover the ball slots due to the retaining ring being moved towards the axially compressed disc springs and the pressure on the balls will be removed, the balls will be able to move radially in an easy manner. This makes the bearing easily loosened.

### Detailed Description of the Invention

The parts of the bearing provided to achieve the objectives of the present invention are illustrated in the annexed drawings.

In the drawings;
Figure-1 is an exploded perspective view of the bearing of the present invention.
**Figure-2** is a cross-section view of the bearing of the present invention.
**Figure-3** is a cross-section view of the retaining ring used in the bearing of the present invention.

The pieces shown in the figures are enumerated separately, and the numbers correspond to the following.
1. Inner ring
2. Retaining ring
3. Retaining balls
4. Disc springs
5. Outer ring
**6.** Ball slot

The bearing of the present invention comprises;
- an inner ring (1) on the outside of the outer ring (5), with slots (6) opened for the retaining balls (3) to be placed,
- a retaining ring (2) with a conical inner part, which enables the retaining balls (3) to exert pressure on the shaft,
- retaining balls (3) which allow the inner ring (1) to be retained by moving radially due to the force applied onto it by the retaining ring (2),
- disc springs (4) which allow the retaining ring (2) to exert pressure on the retaining balls (3) by applying axial force on the retaining ring (2).

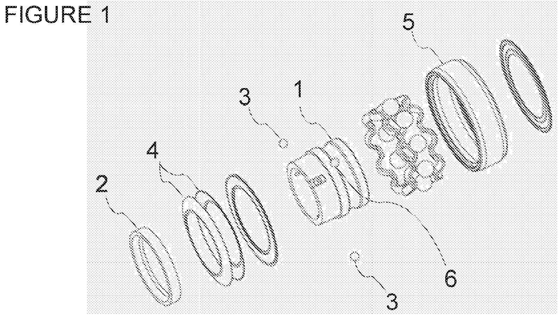

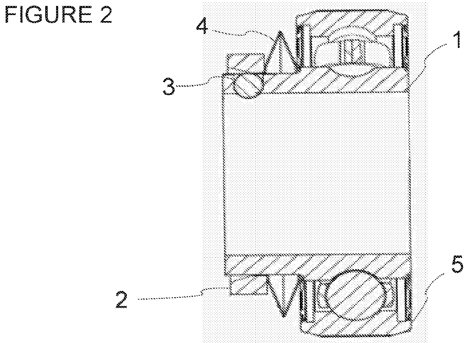

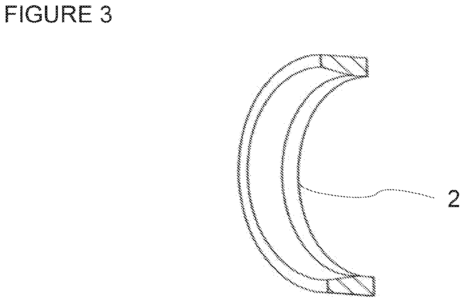

After the bearing is placed on the shaft, disc springs (4) are placed on the part of the inner ring (1) that stays outside the outer ring (5). Following the disc springs (4), the retaining ring (2) is placed on the part of the inner ring (1) that stays outside the outer ring (5). At this stage, the retaining ring (2) covers the ball slots (6). In order to place the retaining balls (3) into the ball slots (6), the retaining ring (2) is moved towards the disc springs (4), thereby compressing said springs (4) even more. After the retaining balls (3) are placed in the ball slots (6), the conical surface of the retaining ring (2) will exert force on the retaining balls (3), due to the disc springs (4) compressing and pushing the retaining ring (2). Thus, the bearing will be fixed onto the shaft by causing the retaining balls (3) to exert radial force on the shaft (Figure 2).

In order to loosen the bearing, the retaining ring (2) will be pushed towards the disc springs (4) and by further compression of the disc springs (4), the retaining ring (2) will uncover the ball slots (6) and the pressure on the retaining balls (3) will be removed. This will cause the radial force applied on the shaft by the radially-moving retaining balls (3) to decrease and the bearing will loosen.

## Claims

1. A bearing assembly configured to be mounted to a shaft with a rotation axis, wherein the bearing assembly comprises:
- an outer ring (5);
- an inner ring (1) comprising
- a portion located axially outside of the outer ring (5); and
- ball slots (6) passing radially through said portion;
- a retaining ring (2) placed on said portion, wherein the retaining ring (2) comprises a conical inner surface which conical inner surface faces the ball slots (6);
- disc springs (4) placed on said portion, the disc springs (4) abutting the retaining ring (2); and
- retaining balls (3) which are placed in the ball slots (6) configured to exert radial force on the shaft in order to fix the bearing to the shaft, the radial force resulting from the disc springs (4) pushing the retaining ring (2) such that the conical surface of the retaining ring (2) exerts radial force on the retaining balls (3).

## Patentansprüche

1. Eine Lageranordnung, die konfiguriert ist, um an einer Welle mit einer Drehachse montiert zu werden, wobei die Lageranordnung umfasst:
- einen Außenring (5);
- einen Innenring (1), umfassend
- einem Teil, der axial außerhalb des Außenrings (5) liegt; und
- Kugelkerben (6), die radial durch das genannte Teil verlaufen;
- einen Haltering (2), der auf dem genannten Teil angebracht ist, wobei der Haltering (2) eine konische Innenfläche umfasst, die den Kugelkerben (6) zugewandt ist;
- Scheibenfedern (4), die auf dem genannten Teil angebracht sind, wobei die Scheibenfedern (4) gegen den Haltering (2) stoßen; und
- Es umfasst Haltekugeln (3), die in den Kugelkerben (6) angeordnet sind, die konfiguriert sind, um eine Radialkraft auf die Welle auszuüben, um das Lager auf der Welle zu befestigen, wobei die Radialkraft aus den Scheibenfedern (4) resultiert, die den Haltering (2) drücken, so dass die konische Oberfläche des Halterings (2) eine Radialkraft auf die Haltekugeln (3) ausübt.

## Revendications

1. Ensemble de palier configuré pour être monté sur un arbre avec un axe de rotation, dans lequel l'ensemble de palier comprend :
- une bague extérieure (5) ;
- une bague intérieure (1) comprenant
- une partie située axialement à l'extérieur de la bague extérieure (5) ; et
- les encoches de billes (6) traversant radialement ladite partie ;
- une bague de retenue (2) placée sur ladite partie, dans lequel la bague de retenue (2) comprend une surface interne conique, laquelle surface interne conique fait face aux encoches de billes (6) ;
- des ressorts à disque (4) placés sur ladite partie, les ressorts à disque (4) venant en butée contre la bague de retenue (2) ; et
- des billes de retenue (3) qui sont placées dans les encoches de billes (6) configurées pour exercer une force radiale sur l'arbre afin de fixer le palier sur l'arbre, la force radiale résultant des ressorts à disque (4) poussant la bague de retenue (2) de telle sorte que la surface conique de la bague de retenue (2) exerce une force radiale sur les billes de retenue (3).
